# EUROPEAN PATENT SPECIFICATION

(11) **EP 1 445 216 B1**
(45) Date of publication and mention of the grant of the patent: **16.05.2007**
(21) Application number: 04002893.8
(22) Date of filing: 10.02.2004
(51) Int. Cl.: B65G 17/08, B65G 17/40

(54) **Wide chain link conveyor structure**
Förder-Kettengliedstruktur für einen breiten Kettenförderer
Structure de maillon d'une chaîne large transporteuse

(30) Priority: 10.02.2003 DK 200300182; 12.05.2003 DK 200300721
(43) Date of publication of application: 11.08.2004
(73) Proprietor: uni-chains A/S, 7100 Vejle (DK)
(72) Inventor: Damkjaer, John Haue, 7120 Vejle (DK); Damkjaer, Poul Erik, 7120 Vejle (DK)
(74) Representative: Tellefsen, Jens J.

(56) References cited:
- EP-A- 1 136 397
- EP-A- 1 264 786
- US-A- 3 674 130
- US-A- 5 706 934
- US-A1- 2002 180 090

## Description

### TECHNICAL FIELD

The present invention relates to a conveyor belt especially for use in the fresh food production industry as well as a chain link for constructing such a conveyor belt.

### BACKGROUND OF THE INVENTION

In slaughterhouses and abattoirs the butchering of animals is highly industrialised and during the process the animals or part of the animals are transported for example from storage to different stages where the actual cutting of the animals into the desired sections/pieces takes place. During this process, the parts of the animals or lumps of meat are transported on conveyor belts.

Document EP 1264786 is considered as the most appropriate state of the art corresponding to the preamble of claim 1.

In addition to a desire to be able to have mobile working stations in the fresh food production industry, and especially in the poultry abattoirs, the fish industry and other similar fresh food working industry where bacteria and the like are present, it is desirable to be able to increase the hygienic standard by being able to securely clean the equipment used.

In a number of instances, it has been proven that the cause of contaminated fresh food can be followed back to the machinery and the equipment used in the production of the fresh food industry. Here it is both the knives, saws, trays, buckets, boxes and conveyors which can give rise to contamination of the products produced.

These conveyor belts are often 60 cm wide or more so that the entire carcass of an animal or parts thereof will fit onto the conveyor belt. At the same time it is desirable to butcher the animals directly on the conveyor belt as they pass the workstation. For this purpose specialised conveyor belts have been developed where the surface is relatively flush and the independent chain links are assembled in such a manner that the gaps and slices between each link are minimized.

Furthermore, in order to reduce the costs of manufacturing the chain links which make up a conveyor belt, the chain links are often made in an size where, in order to assemble a conveyor belt that is 60 cm or more wide, a number of chain links in the width direction of the conveyor belt is needed. The conveyor belt is hereby assembled by a number of chain links, for example 7 or 8, making up the entire width of the belt and the adjacent row of chain links is assembled in a staggered manner such that a brick laying pattern is constructed.

The chain links are usually assembled by providing protruding eye parts in both the front and rear end of each chain link, such that an eye part alternates with a recess substantially corresponding in size to the width of the eye part. Furthermore, the eye parts are offset on the rear side in relation to the eye parts on the front side of each chain link.

Furthermore, approximately in the middle of each eye part in a transverse direction in relation to the travelling direction of the conveyor belt, an aperture is provided through all the eye parts in each chain link. By overlapping the eye parts including the apertures in a rear side of one chain link with the eye parts and apertures of an adjacent chain link's front edge, a through going aperture across the width of the conveyor belt is achieved. A pin is thereafter inserted through all the apertures whereby the two chain links become coupled in a hinge like manner.

In the food producing industry and especially in slaughterhouses and abattoirs the hygienic requirements are very strict in order not to contaminate the fresh meat being produced in such places. It is, therefore, necessary that a high degree of cleaning of the conveyor belt is achieved. In order to facilitate this the eye parts and pin members of the conveyor belt are exposed in such a manner that they can be cleaned with high pressure water, steam or the like.

In other applications the conveyor belt is partly disassembled and lowered into chemical rinsing baths, for example over night, in order to assure that no contamination from bacterial growth in the chain link will cause contamination of the meat to be processed on the conveyor belt.

In order to be able to cut the meat directly on the conveyor belt, the top surface of each chain link has a certain size in the transport direction such that a level and stable work surface is provided. In order for this surface to be sufficiently strong in order to withstand the extra force exerted on the surface due to the working of the meat, a supporting ridge is sometimes provided on the underside for supporting the conveyor belt on the conveyor construction.

Some of the problems with the prior art conveyor belts as discussed above is the fact that in the conveyor belt's width direction, the conveyor belt is made up of a number of independent chain links. Between each chain link there will be a gap wherein cut off meat particles and other substances will be able to accumulate. Furthermore, these gaps between the independent chain links are also difficult to rinse in that they usually are very narrow, which makes it difficult for high pressure water jets to flush everything away in that the high pressure source has to be directed perfectly parallel to the slit in order to be able to penetrate the slit and achieve a cleaning action of said slit.

Another disadvantage with the assembly of the conveyor belt from a number of chain links in the width direction is that a number of chain link end sections are comprised in such a conveyor belt. When a part of an animal to be butchered is transported from one conveyor belt onto another conveyor belt, the meat lump will often fall from one conveyor belt to the next conveyor belt. During this fall, on impact with the lower lying conveyor belt it will exert a comparatively high force on to the lower lying conveyor belt. Often the first point of impact for such a lump of meat will be a comer of one of the many chain links. Due to the relatively fragile construction of the free corners of the chain links, these will often break off. These loose plastic chips afterwards present the danger of ending up in the finished meat product, and furthermore the damage of the chain link needs to be repaired. The same problem can arise due to the working process of the butchers working along the conveyor belt in that during their work routines they might accidentally hit the conveyor belt with a tool such that a corner breaks off.

Furthermore, as the butchers cut the meat directly on the belt, the knives can get stuck in the gaps between the chain links. This gives rise to two main problems. The knife can be pulled out of the hand of the butcher, and due to the resilient nature of the blade it might loosen itself from the belt and fly off with the risk of injuring someone. Alternatively, when the knife becomes stuck in the gap a part of it might break off thereby give rise to the danger that the part ends up in the finished products. If it is detected, the conveyor belt and thereby the entire production must be stopped while the knife or part of the blade is recovered.

### OBJECT OF THE INVENTION

It is therefore an object of the present invention to provide a conveyor belt, especially for use in the fresh food production industry, which due to its construction both provides a conveyor belt where the fresh food items can be manipulated and worked at and at the same time improves the hygienic standard by making the conveyor belt and thereby each separate chain link easier to clean whereby an improved hygienic standard can be achieved.

The invention sets out to alleviate these and other disadvantages by providing a conveyor belt according to the appended claim 1.

By this inventive chain link is achieved that the narrow gaps between each assembled chain link in the prior art is not present such that from a hygienic point of view it belink, which usually constitutes 40 - 60 mm of the total length of the conveyor belt, which altogether, especially for deboning lines, might be 300-400 meter long, no gaps are present. This in turn gives the added security that the multitude of gaps, and for the example mentioned above it would be more than 30,000 gaps, does not have to be cleaned. This gives rise to a substantial increase in the confidence that a satisfactory cleaning process complying with the high hygienic standards in the meat producing business can be achieved.

The chain links being used for the conveyor belts of the type mentioned above are usually made from an injection-moulded plastic material. During the moulding process and especially the hardening and cooling phase, the plastic material will have a tendency to shrink between 2 and 3 %.

The apertures produced in the eye parts are made by inserting a steel pin prior to injecting the mouldable material into the injection mould.

After the injected material has begun to harden, the pins are withdrawn whereby the apertures in the eye parts are formed. At the same time, however, the plastic material due to the chemical composition, will give rise to the shrinkage stated above.

When the pin is being withdrawn, the eye parts will tend to shrink around the pin, whereby a rather large force is needed in order to withdraw the pin. A further shrinkage and influence of the pins arises from the fact that the main portion of the chain link between the eye parts on the front and rear edges of each chain link also shrinks 2 to 3 %. This again causes increased tension on the pins, especially from the outer edges of the apertures.

It has, therefore, in the art been an accepted compromise that in order to be able to produce the chain links in an economically safe way, i.e. with injection mould of a size resulting in that the shrinkage only will have a minimum effect on the production process, and then on the other hand assemble the rather wide conveyor belt from a number of chain links as discussed above.

The invention, however, in order to alleviate the disadvantages as discussed above with reference to cleaning procedures and hygienic standards as well as the breaking off of comers which may also contaminate the meat products the inventor has developed an injection mould which takes into account the shrinkage of the plastic material such that before removing the pins the apertures and thereby the eye parts on the front and rear edges are brought together corresponding to the 2 % shrinkage, whereby the tension on the pins arising from forming the apertures in the eye part is substantially lessened such that it is possible to manufacture chain links with a substantial width.

This also makes it possible in a further preferred embodiment to produce a conveyor belt wherein the distance between the front and rear edges is substantially larger than the projecting eye parts extends in the conveyors travelling direction and that on the underside of each chain link is configured a support ridge arranged centrally and extending substantially across the entire width of the chain link.

Hereby is achieved that the effective working surface is enlarged such that a more stable working surface for the people working along the conveyor belt is provided. This in turn results in better working conditions and a more safe and stable cutting surface and thereby minimises the risk of damaging both the meat and the workers.

According to the invention the underside of the chain link slopes away from the base of the ridge, such that the link's material thickness is greater in the middle of the link than along the front and rear edges. In this manner it is assured that liquids and water, which may assemble on the underside of the chain link during the transport of the chain links on their return trip, will drain from the chain links such that also during the production time in the slaughterhouse a higher degree of hygiene is achieved.

By further shaping the eye parts such that the eye parts are wider in the conveyor belts transverse direction at the top surface and tapers towards the under surface, it is achieved that it becomes easier to flush out pieces of meat or other debris which have accumulated around the eye parts and the pin connecting two adjacent chain links.

This configuration also creates bigger openings which again improves the cleaning action in that more water can be forced through the larger openings between the superposed eye parts.

These openings occur when the chain links in the conveyor belt change direction due to the change in path way, for example when the chain link has to perform its return travel at the underside of the conveyor structure.

Usually, the conveyor belt is strung out between two driving wheels, where the power from the motor is imparted into the conveyor belt which thereby is brought into motion. When the conveyor belt turns around the wheels, each chain link will change orientation in relation to a neighbouring chain link and thereby the openings around the eye parts will be provided.

In a still further preferred embodiment a configuration having along the front and rear edges the eye parts has a width perpendicular to the travelling direction smaller than the adjacent recess, and furthermore that the upper side of the eye parts is flush with the upper side of the chain links main portion, a larger effective conveyor belt working area is provided.

In this manner it is provided that the eye parts will fit in the recess provided in an adjacent chain link between two eye parts. Furthermore, by having the top part of the eye part flush with the working surface of the conveyor belt, the assembly of two chain links will provide an effective working area in stead of a connection area with substantially different surface conditions than when the top parts of the eye parts are flush with the working surface.

In order to further provide a stable working surface and a strong chain link the height i.e. the distance between the over side of the chain link and the under side of the ridge, respectively the underside of the eye parts is constant. In this manner the chain link is supported at three distinct points along its extension in the intended travel direction of the conveyor belt.

In view of the injection mould process discussed briefly above, it has been found that advantageous embodiments of the invention are achieved when each link has a width perpendicular to the travelling direction which is between 400 mm and 800 mm, preferably between 500 mm and 700 mm, and most preferably 600 mm, and the thickness of each link perpendicular to the surface is between 4 mm and 28 mm, preferably 7 mm to 20 mm and most preferred 12 mm to 17 mm.

In this manner quite large chain links are provided which by themselves or by arranging another similar conveyor belt alongside can provide conveyor belts with a width corresponding to the requirements in the slaughterhouse with a minimum number of chain links and thereby a minimum number of assembly gaps such that the hygienic standard can easily and more securely be obtained.

Also, in view of the injection moulding process and the flexibility of the resulting conveyor belt, it has been found advantageous that between 30 and 40 eye protrusions and the same number of recesses are provided for the 600 mm wide links and that between 20 and 28 eye protrusions and the same number of recesses are provided for the 400 mm wide links and further that between 40 and 60 eye protrusions and the same number of recesses are provided for the 800 mm wide links.

This aspect shall be seen in relation to the forces arising on the pin members which are withdrawn during the injection moulding process. As the plastic hardens and cools a shrinkage of about 2-3 % as mentioned above will occur in the plastic material and thereby increased tension will be created on the aperture forming pins. With the number of eye parts and therefore number of apertures formed as disclosed in this preferred embodiment an advantageous compromise between the injection moulding process and the flexibility and effective top working surface of the resulting conveyor belt is achieved.

Also for the same reasons, i.e. due to the injection moulding process, the shrinkage and the desire to provide a large effective working top surface on the conveyor belt it has been found advantageous that the distance in the travelling direction of the conveyor belt, between the apertures in the eye parts in the front edge and the rear edge is between 20 mm and 200 mm, more preferably between 30 mm and 175 mm, still more preferred between 40 mm and 125 mm, and most preferred 45 mm to 100 mm.

With chain links within these ranges it has been found that a stable and large top surface is provided for transporting and working the meat and at the same time the diameter of the turning wheels can be kept at a relatively small size and furthermore that the number of hinge assemblies where hygienic and cleaning problems can arise is kept at a minimum.

In a further advantageous embodiment a conveyor belt wherein integral eye projections and corresponding recesses are provided in one or more clusters along the front and rear edge of each chain link, and that each cluster comprises two or more eye projections, and that each said eye projection comprises an aperture parallel to the top surface and perpendicular to the intended travel direction of the conveyor belt such that adjacent substantially identical chain links may be assembled in a hinge like manner by inserting one or more pins through overlapping apertures provided in the eye projections in two adjacent chain links, when said eye projections are inserted in corresponding recesses in an adjacent chain link.

In traditional chain links, there are eye parts or eye projections provided along the entire front or rear edge of each chain link. This gives a very strong load distributing and load carrying capability to the conveyor belt which in many instances is not necessary in order to carry out the task which the conveyor belt is designed for. By only providing a small number of projecting eye parts and providing these in clusters, less small spaces will by created between the eye parts wherein meat cut offs or other potential contaminants can be caught which small spaces also makes it difficult to properly clean the conveyor belt. It is of cause possible to clean the conveyor belts, but it requires special care, and in some instances special equipment is necessary in order to reach the hygienic standard required.

In a preferred embodiment between two and nine cluster, preferably between three and eight clusters, and most preferred between four and seven clusters are arranged along front and rear edges of each chain link.

Apart from working as hinge and thereby connecting assemblies between two adjacent chain links, the eye projections also function as lands onto which the driving wheels of the conveyor structure transfers the driving force. It is therefore desirable to provide the same number of clusters as a number of drive wheels provided in the conveyor structure in order to be able to get a non-twisting transfer of forces from the driving wheels to the conveyor belt.

In a still further embodiment of the invention, the front and rear edge of each chain link between the at least two clusters is in the shape of a straight edge.

With this embodiment, the cleaning of the conveyor belt, and especially the drainage of water and other fluids from the conveyor belt is facilitated in that as the conveyor belt turns around the driving wheels, openings will occur, and especially in the sections where no clusters are provided and straight edges are arranged, a wide gap will be provided through which fluid, water and other contaminants can drain off the belt.

In a further advantageous embodiment, the front and rear edge of each chain link between the at least two clusters is in the shape of alternating projecting portions, and corresponding recesses, such that a projection on the front edge is provided symmetrically with a recess on the rear edge, such that when two adjacent chain links are assembled the projections on one chain link snugly fits in the corresponding recess of the adjacent chain link.

The alternating projecting portions provides a substantially continuous surface such that even if the conveyor belt has to change elevation, especially when going upwards, the working/transport surface of the conveyor belt will be substantially continuous, even though the surface angle of two adjacent chain links may alternate.

In a further embodiment, the projections' corresponding recesses are in the shape of rectangles, triangles, semi-circles or any other suitable shape. The important feature here being that the interfit such that a projection on either the front or the rear edge of one chain link interfits with a recess corresponding in shape and size on an adjacent chain link such that a substantially continuous surface is provided.

In a further advantageous embodiment, one or a number of separate pins up to corresponding to the number of clusters are used for assembling two adjacent chain links. According to the circumstances relating to assembly of the chain link, service and maintenance of the conveyor belt one or more hinge pins can be used in order to assemble the chains links into a conveyor belt.

In a still further embodiment, a support ridge arranged perpendicular to the intended travelling direction of the chain link may be provided, projecting from the underside of each chain link, and where the ridge extends to a plane parallel to the lowermost portion of the chain link. Especially when heavy items are to be placed on the conveyor belt, it can be advantageous to strengthen the chain link by providing a support ridge projecting from the underside of each chain link. The support ridge also serves to scrape off any items which might have passed the conveyor belt and otherwise would be hidden between the conveyor belt and the support structure for the conveyor. The support ridge in this embodiment, therefore, also serves as a scraper which will remove any foreign matter from the conveyor belt.

In a further advantageous embodiment, the support ridge is only present in one or more sections perpendicular to the intended travelling direction of the chain link. In order to save weight of the entire conveyor belt and thereby provide more power for transporting goods on the conveyor belt, the support ridge can be broken such that only sections are provided, for example sections off-set from the clusters of eye parts which also serve as support for the conveyor belt's top transporting surface.

In a further advantageous embodiment, the support ridge sections present on one chain link is alternating position with the support ridge sections of an adjacent chain link. In this manner, the advantages of cleaning the underlying support structure over the entire width of the conveyor belt as well as the weight saving advantages of only providing a support ridge intermitting across the conveyor belt are combined to provide a conveyor belt which fulfils the requirements to a high hygienic standard combined with the high load carrying capability.

The invention also discloses a chain link for use in a conveyor belt as discussed above, which chain link is particular in that the link is manufactured as a single piece by a plastic moulding process, and that the link has a substantially flush top surface and that one or more clusters of projecting eye parts are arranged along front and rear edges of the link, such that an eye part alternates with a corresponding recess, and that an aperture is provided in each eye part perpendicular to the intended travelling direction of the chain link, in a plane parallel with the top surface, and that each cluster comprises at least two eye parts, and that along the edges between the one or more clusters of eye parts, no eye parts are provided.

A chain link for constructing a conveyor belt as set out above is also described. This chain link is. special in that the link is manufactured as a single piece in a plastic moulding process, preferably injection moulding, and further that it has a substantially flush top surface, and that eye parts are arranged along to opposite edges said eye parts top surface being flush with the top surface of the chain link, and that eye parts along one edge are staggered relative to eye parts along the opposite edge, and that the width of recesses formed between adjacent eye parts, at least in the top surfaces plane, substantially corresponds to the width of adjacent eye parts.

Also, the chain link in a further advantageous embodiment is made with a higher point on the top surface. From this high point the top surface can slope down to the front and rear edges of the respective link. The height difference between the high point and the edge should only be a matter of millimetres corresponding to 1-2° or just enough to drain the top surface of the chain link.

### BRIEF DESCRIPTION OF THE DRAWINGS

The invention will now be described in more detail with reference to the accompanying drawing. It should, however, be noted that the description of a preferred embodiment does not limit the scope of the invention which is to be limited only by the appended claims.
- Fig. 1: illustrates a conveyor belt built up of a number of chain links as illustrated in the prior art,
- fig. 2: illustrates a conveyor belt according to the invention,
- fig. 3: illustrates a cross-section through a chain link for use in the conveyor belt according to the invention,
- fig. 4: illustrates the edge of a chain link for use in the conveyor belt according to the invention,
- fig. 5: illustrates a plane view of the chain link according to the invention,
- fig. 6: illustrates another embodiment corresponding to fig. 3.
- fig. 7: illustrates an embodiment of a chain link according to the invention,
- fig. 8: illustrates a cross-section through a chain link not part of the invention,
- fig. 9: illustrates a alternative embodiment of a cross-section through a chain link according to the invention, and
- fig. 10: illustrates different projections

### DETAILED DESCRIPTION OF EMBODIMENTS

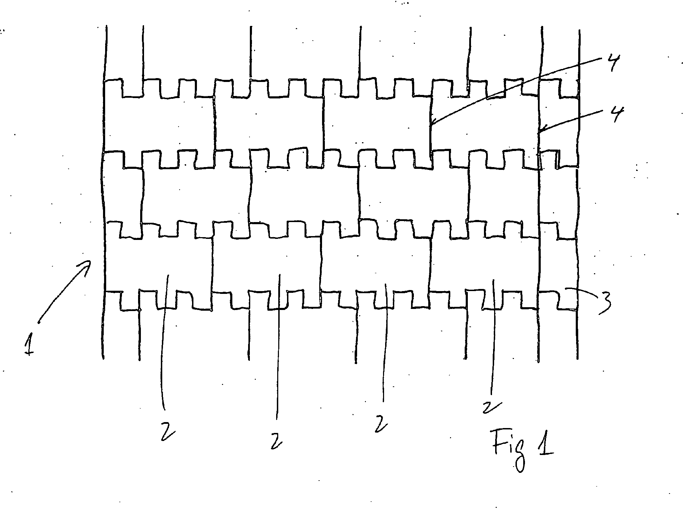

Fig. 1 illustrates a traditional conveyor belt having the width necessary for handling fresh food products such as meat, carcasses and the like. The conveyor 1 is constructed from a number of chain links 2, 3. Most of the chain links 2 are identical, but in order to achieve a stronger structure of the conveyor belt there is inserted odd chain links 3, whereby the chain links will be staggered in relation to chain links in an adjacent row such that a brick pattern will arise. The conveyor belt 1 illustrated in fig. 1 only serves to illustrate how a prior art conveyor belt of the type which the present invention concerns is traditionally constructed. It should be noted that normally at least six or seven chain links are assembled in order to provide the desired width of the conveyor. This in turn gives rise to a number of gaps 4 between adjacent chain links in the same row.

As work often will take place on the top surface of the chain link it is unavoidable that debris such as small pieces of meat, fat, bone and the like will be lodged in these gaps. In order to avoid contamination of other food stuff being transported on the conveyor belt, the conveyor belts are thoroughly cleaned at regular intervals in order to provide the necessary high level of hygiene when handling fresh food stuff. This can for example by done by dissembling the conveyor belt and inserting the chain links into chemical baths over night or with high pressure cleaning with water or steam.

In fig. 2 is illustrated a conveyor belt according to the invention built up of a number of chain links 5. As illustrated only one chain link is used in order to provide the desired width of the conveyor belt. Hereby is achieved that the gaps 4 with reference to fig. 1 are avoided and thereby the cleaning procedure can be performed with a higher certainty for obtaining the desired result.

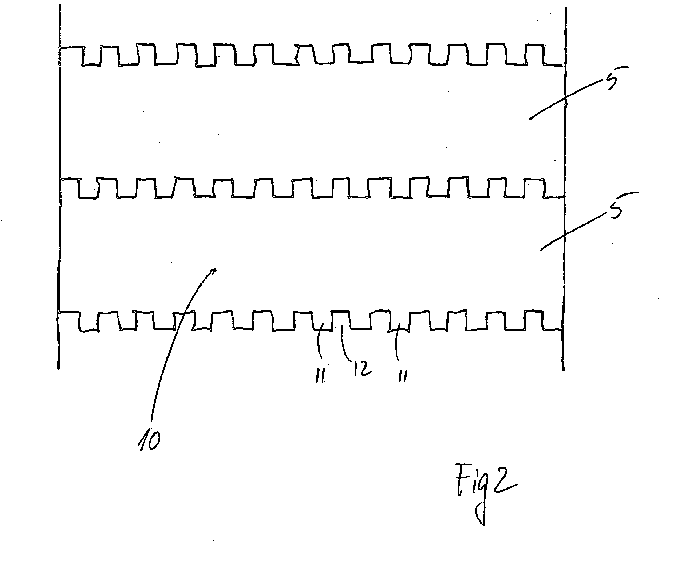

In fig. 3 a cross-section through a chain link as illustrated in fig. 5 according to the invention is illustrated. As can be seen the eye parts 6 at both the front edge and rear edge of the chain link are equipped with apertures 7. In the middle of the chain link on the underside is arranged a ridge 8 such that the top surface of the chain link is supported in three distinct points, namely the lowermost points of the eye part 6 and the lowermost part of the ridge 8. In this manner a stable and firm working top surface is provided on the conveyor belt.

Furthermore, as indicated the material thickness from the base of the ridge 8 towards the eye parts 6 decreases such that a slope 9 is provided. As the chain links making up the conveyor belt are transported back towards the beginning of the conveyor belt, this takes place in an upside-down position. By providing the slope 9 it will be possible to drain off any water and debris which might have come to rest on the underside of the conveyor belt.

Furthermore, as illustrated in fig. 4 the eye parts 6 at the top section 11 has a width substantially corresponding to the width of the neighbouring recess 12. Furthermore, the top section of the eye part is flush with the top surface 10 (see fig. 2) of the chain link, whereby the assembled conveyor belt will have a substantially flush working surface covering the entire conveyor belt surface. The eye part 6 as illustrated in fig. 4 furthermore tapers towards the underside of the chain link such that when the chain link is being turned around the drive wheels at the end of the conveyor belt construction, openings will be provided between each chain link due to the tapered configuration of the eye parts. Hereby it becomes possible to drain off the water, debris and other foreign objects that might have been caught at the underside of the chain link through the openings provided due to the taper of the eye parts.

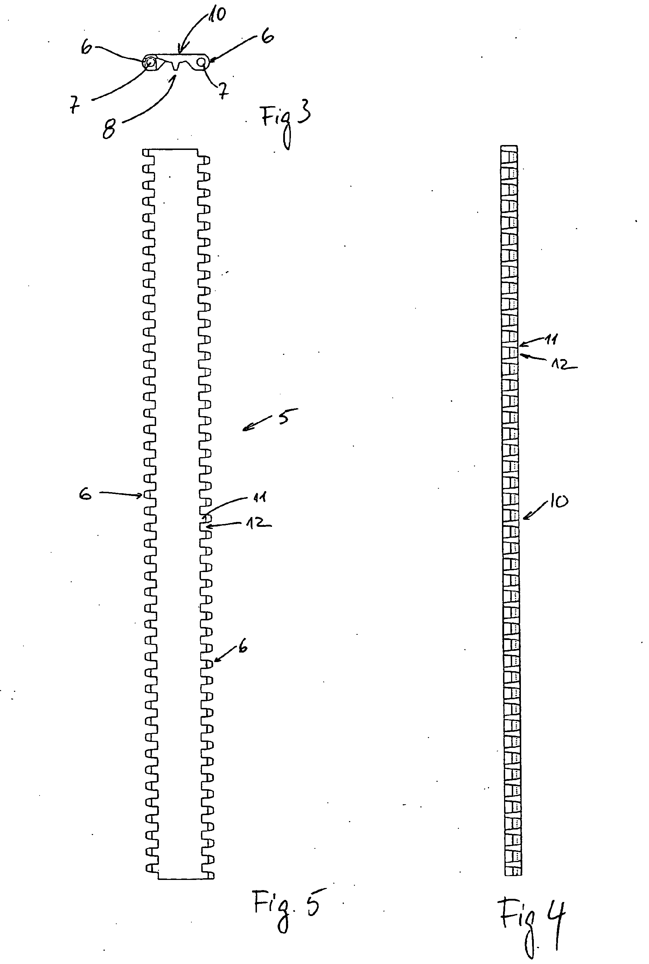

In fig. 6 is illustrated a cross-section through a chain link according to the invention. In this embodiment the top surface 10 is provided with a higher point 13 from which the top surface slopes downwards towards the eye parts 6. In this manner by providing a slightly sloping top surface, water or other liquids will drain off the top surface. The slope shall be 1-5° which does not influence the top surface as a working surface. Also, the bottommost points of the eye parts 6 are at the same level as the bottommost point of the ridge 8 in order to provide a steady support for the chain link.

In Fig. 7 is illustrated a chain link 14 seen from above. Along the edges 15,16 of the chain link 14 is arranged clusters 17 of projecting eye parts 11 alternating with corresponding recesses 12.

The clusters arranged around the front edge 15 of the chain link 14 will fit with the clusters arranged along the rear edge 16 of the chain link 14 such that projecting eye parts 11 will fit inside the recesses 12. In all the eye parts 11 are provided apertures 7 illustrated by dashed lines such that one or more connecting pins (not shown) can be inserted through the overlapping apertures 7 whereby a hinged connection is provided between two adjacent chain links. The connecting pins can either be one long pin connecting all three clusters at once or be three separate smaller pins such that each mutually connected cluster will be connected by one separate hinge pin.

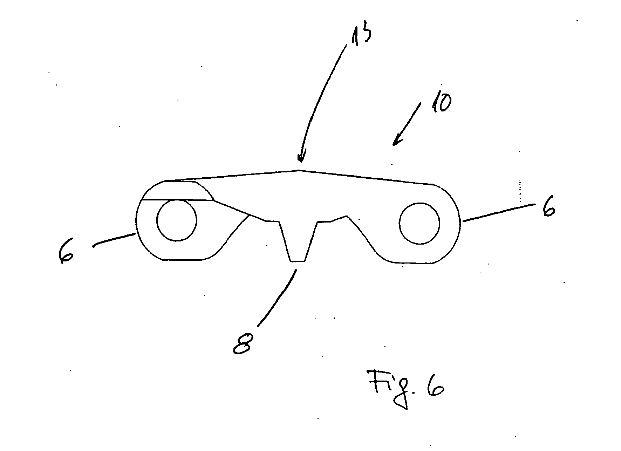

Turning to Fig. 8, a cross-section through a chain link not part of the invention is illustrated. The projecting eye parts 11 are provided with apertures 7 for receiving a connection pin as described above.

The top surface 10 of the chain link is substantially flush in that the curvature of the projecting eye parts 11 corresponds to the shape of the bottom of the recess 18.

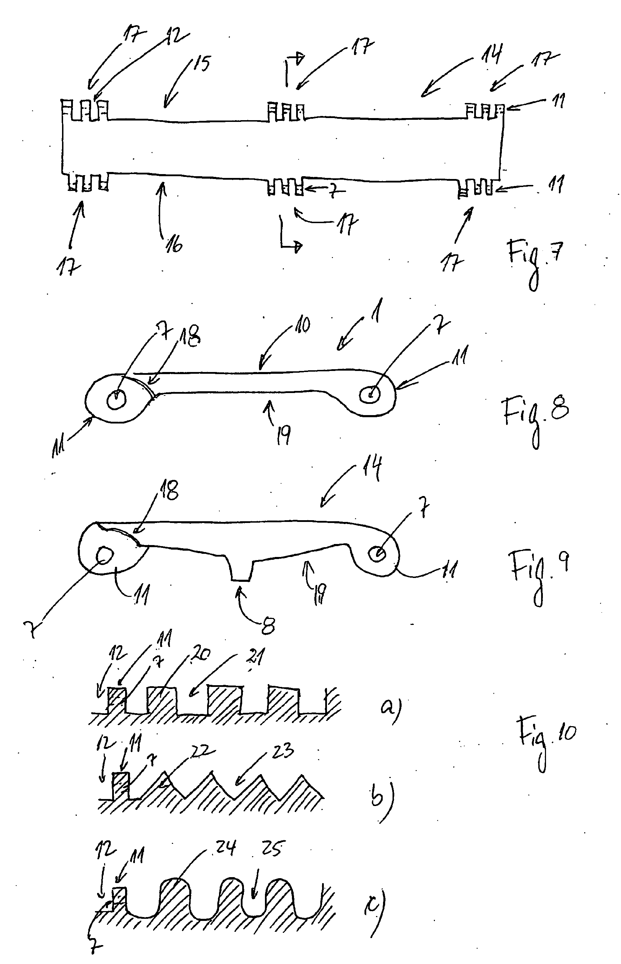

In Fig. 9 is illustrated an embodiment where the underside 19 of the chain link 14 is provided with a support ridge 8. The support ridge is provided over the entire underside of the chain link from one side to the opposite side of the chain link. Another consideration for providing the support ridge 8 can be the ability of the support ridges to scrape along the support structure of the conveyor belt (not illustrated) such that any debris or other contaminants are constantly removed from the conveyor belt's support structure.

In Fig. 10 is illustrated three different configurations of the sections i.e. edges between clusters of projecting eye parts. In Fig. 10a, the edges 15,16 are provided with rectangles 20 alternating with recesses 21 corresponding in shape such that the recesses 21 will accommodate rectangles 20 provided on a adjacent chain links.

In Fig. 10b, mutually fitting triangles and triangular shaped recesses 22,23 are provided in order to provide a substantially flush top surface when the chain links are assembled in a conveyor belt structure.

In Fig. 10c, semi-circular projections 24 alternating with corresponding recesses 25 are illustrated providing the same advantages as illustrated with reference to Fig. 10a and 10b.

By using the chain links according to the invention and thereby avoiding having to assemble a number of chain links in order to provide the width necessary for constructing a conveyor belt, an improved hygiene and cleaning certainty can be assured. Furthermore, when damage is caused to the chain links, for example as described above when an comer is broken off or deeps cuts for one reasons or the other occurs into the chain link during the working process, it is much simpler to replace one or more chain links according to the invention by simply taking one pin member out and replacing one chain link with a new chain link in comparison to having to assemble a number of chain links and guiding the pin through this number of chain links which during the process might move in relation to each other. So on top of being able to easier and thereby cheaper attain a better hygiene for the entire conveyor belt, it is also cost saving when having to conduct repairs to the conveyor belt.

It should be noted that in preferred embodiments of the invention the chain links are produced having substantially standard widths of for example 400, 600 and 800 mm such that these in the event that wider conveyor belts are desired can be built up by arranging two parallel conveyor belts using the inventive chain links according to the invention. In this manner a substantial number of gaps 4 are omitted, whereby the resulting conveyor belt has built in a substantially smaller number of sources for contamination.

## Claims

1. Conveyor belt (1) especially for use in the manufacturing of fresh food and in particular for use in slaughterhouses, abattoirs and the like , where said conveyor belt is assembled from a number of substantially identical chain links (5), each link having a transport top surface (10), and underside, a front and rear edge each comprising integral eye projections (6) and corresponding recesses (7), arranged such that a protrusion (6) on the front edge corresponds to a recess (7) on the rear edge, and opposing side edges, such that adjacent links are assembled in a hinge-like manner by inserting a pin through overlapping apertures formed in overlapping eye parts on adjacent chain links, whereby the belt in a direction perpendicular to the travelling direction of the belt is made from one single chain link (5), and that the transport top surface (10) comprises a wide main portion and the top part of the eye projections (6) which are flush with the main portion, such that the belt surface is substantially without apertures and/or openings **characterised in that** on the underside of each chain link(5) is configured a support ridge (8) arranged centrally and extending substantially across the entire width of the chain link such that the underside of the chain link slopes away from the base of said ridge towards the front edge and rear edge, such that the material thickness is greater in the middle of the link than along the front edge and rear edge.

2. Conveyor belt according to claim 1, **characterised in that** the distance between the front and rear edges is substantially larger than the distance the projecting eye parts (6) extends in the conveyors travelling direction.

3. Conveyor belt according to claim 1 or 2 **characterised in that** the eye parts (6) are wider in the conveyor belts transverse direction at the top surface (10) and tapers towards the under surface.

4. Conveyor belt according to claim 1 or 2, **characterised in that** each link has a width perpendicular to the travelling direction which is between 400 mm and 800 mm, preferably between 500 mm and 700 mm, and most preferably 600 mm, and the thickness of each link perpendicular to the surface is between 4 mm and 28 mm, preferably 7 mm to 20 mm and most preferred 12 mm to 17 mm.

5. Conveyor belt according to claim 1 or 2, **characterised in that** between 30 and 40 eye protrusions and the same number of recesses are provided for the 600 mm wide links and that between 20 and 28 eye protrusions and the same number of recesses are provided for the 400 mm wide links and further that between 40 and 60 eye protrusions and the same number of recesses are provided for the 800 mm wide links.

6. Conveyor belt according to claim 1 or 2, **characterised in that** the distance in the travelling direction of the conveyor belt, between the apertures in the eye parts in the front edge and the rear edge is between 20 mm and 200 mm, more preferably between 30 mm and 175 mm, still more preferred between 40 mm and 125 mm, and most preferred 45 mm to 100 mm.

7. Conveyor belt according to claim 1, **characterized in that** integral eye projections and corresponding recesses are provided in one or more clusters along the front and rear edge of each chain link, and that each cluster comprises two or more eye projections, and that each said eye projection comprises an aperture parallel to the top surface and perpendicular to the intended travel direction of the conveyor belt such that adjacent substantially identical chain links may be assembled in a hinge like manner by inserting one or more pins through overlapping apertures provided in the eye projections in two adjacent chain links, when said eye projections are inserted in corresponding recesses in an adjacent chain link.

8. Conveyor belt according to claim 7, wherein between two and nine clusters, preferably between three and eight clusters, and most preferred between four and seven clusters are arranged along front and rear edges of each chain link.

9. Conveyor belt according to claim 7 or 8 wherein one or a number of separate pins up to corresponding to the number of clusters are used for assembling two adjacent chain links.

10. Chain link for use in a conveyor belt according to any of claims 1 to 9, **characterised in that** the link is manufactured as a single piece in a plastic moulding process, preferably injection moulding, and further that it has a substantially flush top surface, and that eye parts are arranged along to opposite edges said eye parts top surface being flush with the top surface of the chain link, and that eye parts along one edge are staggered relative to eye parts along the opposite edge, and that the width of recesses formed between adjacent eye parts, at least in the top surfaces plane, substantially corresponds to the width of adjacent eye parts.

11. Chain link according to claim 10, wherein the link is manufactured as a single piece by a plastic moulding process, and that the link has a substantially flush top surface and that one or more clusters of projecting eye parts are arranged along front and rear edges of the link, such that an eye part alternates with a corresponding recess, and that an aperture is provided in each eye part perpendicular to the intended travelling direction of the chain link, in a plane parallel with the top surface, and that each cluster comprises at least two eye parts, and that along the edges between the one or more clusters of eye parts, no eye parts are provided.

## Patentansprüche

1. Förderband (1) insbesondere für den Einsatz bei der Herstellung von frischen Lebensmitteln und insbesondere für den Einsatz in Metzgereien, Schlachthäusern und dergleichen, wobei das Förderband aus einer Vielzahl von im Wesentlichen gleichen Kettengliedern (5) zusammengesetzt ist, wobei jedes Glied eine Transportoberfläche (10) und eine Unterseite, eine vordere und eine hintere Kante mit integralem Größenvorsprung (6) und entsprechenden Ausnehmungen (7) aufweist, wobei diese derart angeordnet sind, dass ein Vorsprung (6) an einer vorderen Kante mit einer Ausnehmung an der hinteren Kante korrespondiert, und gegenüberliegende Seitenkanten in der Art vorgesehen sind, dass aneinander liegende Glieder in einer gelenkigen Art durch das Einsetzen eines Bolzens in die überlappenden Öffnungen, welche in den überlappenden Ösenteilen von aneinander liegenden Kettengliedern gebildet sind, zusammengesetzt werden, wobei das Förderband in einer zur Bewegungsrichtung senkrechten Richtung des Förderbandes aus einem einzigen Kettenglied (5) gebildet wird und dass die Transportoberfläche (10) einen breiten Hauptbereich aufweist und der obere Teil der Ösenvorsprünge (6), welche mit dem Hauptbereich in der Art bündig sind, dass die Förderbandfläche im Wesentlichen ohne Öffnungen und/oder Spalten gebildet wird,
**dadurch gekennzeichnet, dass**
auf der unteren Seite eines jeden Kettengliedes (5) eine Unterstützungsleiste (8) gebildet ist und zentral und im Wesentlichen über die gesamte Breite des Kettengliedes sich erstreckend in der Art angeordnet ist, dass die Unterseite des Kettengliedes sich von der Basis der Leiste zu der vorderen Kante und hinteren Kante in der Art neigt, dass die Materialdicke in der Mitte des Gliedes größer ist als entlang der vorderen und hinteren Kante.

2. Förderband gemäß Anspruch 1,
**dadurch gekennzeichnet, dass**
der Abstand zwischen der vorderen und hinteren Kante im Wesentlichen größer ist als der Abstand der vorstehenden Ösenteile (6), die sich in der Förderbandbewegungsrichtung erstrecken.

3. Förderband gemäß Anspruch 1 oder 2,
**dadurch gekennzeichnet, dass**
die Ösenteile (6) breiter an der oberen Oberfläche (10) in der Förderbandbewegungsrichtung sind und sich zur unteren Fläche verjüngen.

4. Förderband gemäß Anspruch 1 oder 2,
**dadurch gekennzeichnet, dass**
jedes Glied eine Breite senkrecht zur Bewegungsrichtung aufweist, welche zwischen 400 mm und 800 mm, bevorzugt zwischen 500 mm und 700 mm und besonders bevorzugt 600 mm ist und die Dicke jedes Gliedes senkrecht zu der Oberfläche zwischen 4 mm und 28 mm, bevorzugt 7 mm bis 20 mm und besonders bevorzugt 12 mm bis 17 mm ist.

5. Förderband gemäß Anspruch 1 oder 2,
**dadurch gekennzeichnet, dass**
zwischen 30 und 40 Ösenvorsprünge und dieselbe Anzahl an Ausnehmungen für die 600 mm großen Glieder und das zwischen 20 und 28 Ösenvorsprüngen und dieselbe Anzahl an Ausnehmungen für die 400 mm großen Glieder und darüber hinaus dass zwischen 40 und 60 Ösenvorsprünge und dieselbe Anzahl an Ausnehmungen für 800 mm große Glieder bereitgestellt werden.

6. Förderband gemäß Anspruch 1 oder 2,
**dadurch gekennzeichnet, dass**
der Abstand in Bewegungsrichtung des Förderbandes zwischen den Öffnungen der Ösenteile in der vorderen Kante und der hinteren Kante zwischen 20 mm und 200 mm, bevorzugt zwischen 30 mm und 175 mm, besonders bevorzugt zwischen 40 mm und 125 mm und am meisten bevorzugt zwischen 45 mm und 100 mm ist.

7. Förderband gemäß Anspruch 1,
**dadurch gekennzeichnet, dass**
integrale Ösenvorsprünge und die dazu korrespondierenden Ausnehmungen in einer oder mehreren Gruppen entlang der vorderen oder hinteren Kante jedes Kettengliedes bereitgestellt werden und dass jede Gruppe zwei oder mehr Ösenvorsprünge aufweist und dass jeder der Ösenvorsprünge eine Öffnung parallel zu der oberen Oberfläche und senkrecht zu der beabsichtigten Bewegungsrichtung des Förderbandes in der Art aufweist, dass angrenzende, im Wesentlichen identische Kettenglieder, in einer gelenkigen Art verbunden sind, indem ein oder mehrere Bolzen durch die überlappenden Öffnungen, die durch die Ösenvorsprünge und zwei angrenzenden Kettengliedern bereitgestellt werden, wenn die Ösenvorsprünge in die entsprechenden Ausnehmungen der angrenzenden Kettenglieder eingefügt werden.

8. Förderband gemäß Anspruch 7, wobei zwischen zwei und neun Gruppen, bevorzugt zwischen drei und acht Gruppen und besonders bevorzugt zwischen vier und sieben Gruppen entlang der vorderen und hinteren Kante eines jeden Kettengliedes angeordnet werden.

9. Förderband gemäß Anspruch 7 oder 8, wobei einer oder eine Vielzahl von getrennten Bolzen bis hin zu der entsprechenden Zahl von Gruppen für den Zusammenbau zweier aneinanderliegender Kettenglieder verwendet werden.

10. Kettenglied für den Einsatz in einem Förderband gemäß wenigstens einem der Ansprüche 1 bis 9, **dadurch gekennzeichnet, dass** die Glieder als einstückig in einem Kunststoffformverfahren, bevorzugt in einem Spritzgussverfahren, hergestellt werden und ferner dass sie eine im Wesentlichen ebene Oberfläche aufweisen und dass die Ösenteile entlang gegenüberliegender Kanten angeordnet sind, deren Ösenteile mit der Oberfläche des Kettengliedes fluchten und dass Ösenteile entlang einer Kante relativ zu den Ösenteilen entlang der gegenüberliegenden Kante abgestuft sind und dass die Breite der Ausnehmungen, welche zwischen angrenzenden Ösenteilen gebildet wird, wenigstens in der Oberfläche plan sind und im Wesentlichen mit der Breite der angrenzenden Ösenteile korrespondieren.

11. Kettenglied gemäß Anspruch 10, wobei das Glied als einzelnes Stück mittels einem Kunststoffformverfahren hergestellt wird und das Glied eine im Wesentlichen ebene Oberfläche hat und dass ein oder mehrere Gruppen der vorstehenden Ösenteile entlang der vorderen oder rückwärtigen Kanten des Gliedes in der Art angeordnet sind, dass ein Ösenteil sich mit einer korrespondierenden Ausnehmung abwechselt und dass eine Öffnung in jedem Ösenteil senkrecht zu der beabsichtigten Bewegungsrichtung des Kettengliedes in einer planparallelen Weise mit der Oberfläche vorgesehen ist und dass jede Gruppe wenigstens zwei Ösenteile aufweist und dass entlang der Kanten zwischen dem einen oder mehreren Gruppen von Ösenteilen keine Ösenteile vorgesehen sind.

## Revendications

1. Courroie transporteuse (1) spécialement pour une utilisation dans la fabrication d'aliments frais et en particulier pour une utilisation dans des équarrissoirs, des abattoirs et similaires, dans laquelle ladite courroie transporteuse est assemblée à partir d'un certain nombre de maillons de chaîne (5) sensiblement identiques, chaque maillon ayant une surface supérieure de transport (10), et sur une surface inférieure, une arête avant et une arête arrière comprenant chacune des saillies formant oeil d'un seul tenant (6) et des évidements correspondants (7), agencés de sorte qu'une protubérance (6) sur l'arête avant correspond à un évidement (7) sur l'arête arrière, et des arêtes latérales opposées, de sorte que les maillons adjacents sont assemblés sous la forme d'une articulation en insérant un axe à travers des ouvertures chevauchantes formées dans des parties formant oeil chevauchantes sur des maillons de chaîne adjacents, la courroie dans une direction perpendiculaire à la direction de déplacement de la courroie étant constituée à partir d'un seul maillon de chaîne (5), et la surface supérieure de transport (10) comprend une large partie principale et la partie supérieure des saillies formant oeil (6) qui sont encastrées avec la partie principale, de sorte que la surface de la courroie est sensiblement sans ouverture et/ou orifice, **caractérisée en ce que** sur la partie inférieure de chaque maillon de chaîne (5) il est configuré une crête de support (8) agencée centralement et s'étendant sensiblement d'un bout à l'autre de la totalité de la largeur du maillon de chaîne de sorte que la partie inférieure du maillon de chaîne descend en pente à partir de la base de ladite crête vers l'arête avant et l'arête arrière, de sorte que l'épaisseur du matériau est supérieure au milieu du maillon que le long de l'arête avant et de l'arête arrière.

2. Courroie transporteuse selon la revendication 1, **caractérisée en ce que** la distance entre l'arête avant et l'arête arrière est sensiblement supérieure à la distance sur laquelle les parties formant oeil en saillie (6) s'étendent dans la direction de déplacement de la courroie.

3. Courroie transporteuse selon la revendication 1 ou 2, **caractérisée en ce que** les parties formant oeil (6) sont plus larges dans la direction transversale de la courroie transporteuse au niveau de la partie supérieure (10) et diminuent progressivement vers la surface inférieure.

4. Courroie transporteuse selon la revendication 1 ou 2, **caractérisée en ce que** chaque maillon a une largeur perpendiculaire à la direction de déplacement qui est entre 400 mm et 800 mm, de préférence entre 500 mm et 700 mm, et de manière préférée entre toutes de 600 mm, et l'épaisseur de chaque maillon perpendiculaire à la surface est entre 4 mm et 28 mm, de préférence entre 7 mm et 20 mm et de manière préférée entre toutes entre 12 mm et 17 mm.

5. Courroie transporteuse selon la revendication 1 ou 2, **caractérisée en ce qu'**un nombre compris entre 30 et 40 protubérances formant oeil et le même nombre d'évidements sont fournis pour les maillons ayant une largeur de 600 mm et **en ce qu'**un nombre compris entre 20 et 28 protubérances formant oeil et le même nombre d'évidements sont fournis pour les maillons ayant une largeur de 400 mm et **en ce qu'**en outre un nombre compris entre 40 et 60 protubérances formant oeil et le même nombre d'évidements sont fournis pour les maillons ayant une largeur de 800 mm.

6. Courroie transporteuse selon la revendication 1 ou 2, **caractérisée en ce que** la distance dans la direction de déplacement de la courroie transporteuse, entre les ouvertures dans les parties formant oeil dans l'arête avant et l'arête arrière est entre 20 mm et 200 mm, de manière préférée entre 30 mm et 175 mm, de manière plus préférée entre 40 mm et 125 mm, et de manière préférée entre toutes entre 45 mm et 100 mm.

7. Courroie transporteuse selon la revendication 1, **caractérisée en ce que** les saillies formant oeil d'un seul tenant et les évidements correspondants sont disposés en un ou plusieurs groupes le long de l'arête avant et de l'arête arrière de chaque maillon de chaîne, et **en ce que** chaque groupe comprend au moins deux saillies formant oeil, et **en ce que** chacune desdites saillies formant oeil comprend un orifice parallèle à la surface supérieure et perpendiculaire à la direction de déplacement voulue de la courroie transporteuse de sorte que les maillons de chaîne sensiblement identiques adjacents peuvent être assemblés sous la forme d'une articulation en insérant un ou plusieurs axes à travers des ouvertures chevauchantes disposées dans les saillies formant oeil dans deux maillons de chaîne adjacents, lorsque lesdites saillies formant oeil sont insérées dans les évidements correspondants dans un maillon de chaîne adjacent.

8. Courroie transporteuse selon la revendication 7, dans laquelle entre deux et neuf groupes, de préférence entre trois et huit groupes, et de manière préférée entre toutes entre quatre et sept groupes sont agencés le long des arêtes avant et arrière de chaque maillon de chaîne.

9. Courroie transporteuse selon la revendication 7 ou 8, dans laquelle un ou plusieurs axes séparés pour correspondre au nombre de groupes sont utilisés pour assembler deux maillons de chaîne adjacents.

10. Maillon de chaîne pour une utilisation dans une courroie transporteuse selon l'une quelconque des revendications 1 à 9, **caractérisé en ce que** le maillon est fabriqué en tant que pièce unique lors d'un procédé de moulage de matière plastique, de préférence un moulage par injection, et **en ce qu'**en outre il a une surface supérieure sensiblement encastrée, et **en ce que** les parties formant oeil sont agencées le long des arêtes opposées, ladite surface supérieure des parties formant oeil étant encastrée avec la partie supérieure du maillon de chaîne, et **en ce que** les parties formant oeil le long d'une arête sont décalées par rapport aux parties formant oeil le long de l'arête opposée, et **en ce que** la largeur des évidements formés entre les parties formant oeil adjacentes, au moins sur le plan des surfaces supérieures, correspond sensiblement à la largeur des parties formant oeil adjacentes.

11. Maillon de chaîne selon la revendication 10, dans lequel le maillon est fabriqué en tant que pièce unique par un procédé de moulage de matière plastique, et dans lequel le maillon a une surface supérieure sensiblement encastrée et dans lequel un ou plusieurs groupes de parties formant oeil en saillie sont agencés le long des arêtes avant et arrière du maillon, de sorte qu'une partie formant oeil alterne avec un évidement correspondant, et dans lequel une ouverture est disposée dans chaque partie formant oeil perpendiculaire à la direction de déplacement voulue du maillon de chaîne, dans un plan parallèle à la surface supérieure, et dans lequel chaque groupe comprend au moins deux parties formant oeil, et dans lequel le long des arêtes entre le ou les groupes de parties formant oeil aucune partie formant oeil n'est disposée.
